# EUROPÄISCHE PATENTANMELDUNG

(11) **EP 4 790 291 A1**
(43) Veröffentlichungstag der Anmeldung: **12.08.2026**
(21) Anmeldenummer: 26154549.5
(22) Anmeldetag: 27.01.2026
(51) Int. Cl.: F16L 3/223, F16L 3/237, H02G 3/32

(54) **HALTEVORRICHTUNG ZUM FESTLEGEN EINES LÄNGLICHEN AXIALSYMMETRISCHEN OBJEKTS AN EINEM BAUTEIL**

(30) Priorität: 10.02.2025 DE 102025104804
(71) Anmelder: LISI Automotive KKP GmbH & Co.KG, 97638 Mellrichstadt (DE)
(72) Erfinder: Gluth, Patrick, 97638 Mellrichstadt (DE); Bartsch, Mathias, 97618 Niederlauer (DE)
(74) Vertreter: Habermann Intellectual Property Partnerschaft von Patentanwälten mbB

(57) **Zusammenfassung**

Eine Haltevorrichtung (1) zum Festlegen eines länglichen axialsymmetrischen Objekts an einem Bauteil (4) weist einen Grundkörper (6) auf, der mit einem Befestigungsmittel an dem Bauteil festlegbar ist. Der Grundkörper (6) weist mindestens eine von einer Vorderseite (7) des Grundkörpers (6) bis zu einer gegenüberliegenden Rückseite (8) des Grundkörpers (6) längs einer Objektlängsachse (9) durch den Grundkörper (6) hindurchgehende Objektausnehmung (10) für die Aufnahme des länglichen Objekts auf. Der Grundkörper (6) weist ein Unterteil (11) und ein relativ zu dem Unterteil (11) verlagerbares Oberteil (12) auf, wobei eine zwischen dem Unterteil (11) und dem Oberteil (12) verlaufende Kontaktfläche (13) durch die mindestens eine Objektausnehmung (10) verläuft. In der Objektausnehmung (10) ist ein hülsensegmentförmiges Einlegeteil (14) festlegbar, durch welches eine in einer Querschnittsebene quer zu der Objektlängsachse (9) gemessene lichte Weite (d) der Objektausnehmung (10) verringert wird.

## Beschreibung

Die Erfindung betrifft eine Haltevorrichtung zum Festlegen eines länglichen axialsymmetrischen Objekts an einem Bauteil, wobei die Vorrichtung einen Grundkörper aufweist, der mit einem Befestigungsmittel an dem Bauteil festlegbar ist, wobei der Grundkörper mindestens eine von einer Vorderseite des Grundkörpers bis zu einer gegenüberliegenden Rückseite des Grundkörpers längs einer Objektlängsachse durch den Grundkörper hindurchgehende Objektausnehmung für die Aufnahme des länglichen Objekts aufweist, wobei der Grundkörper ein Unterteil und ein relativ zu dem Unterteil verlagerbares Oberteil aufweist, wobei eine zwischen dem Unterteil und dem Oberteil verlaufenden Kontaktfläche durch die mindestens eine Objektausnehmung verläuft, sodass das längliche Objekt quer zu einer axialen Achse des Objekts in die Objektausnehmung eingeführt werden kann, wenn der Grundkörper auseinandergezogen und die Kontaktfläche freigelegt ist, und wobei das längliche Objekt in der Objektausnehmung festgelegt ist, wenn der Grundkörper zusammengefügt und an dem Bauteil festgelegt ist.

In vielen Bereichen ist es erforderlich oder zweckmäßig, längliche axialsymmetrische Objekte wie beispielsweise Kabel, Schläuche oder Leitungen an einem Bauteil festzulegen und dadurch die Anordnung der länglichen Objekte relativ zu dem Bauteil vorzugeben und zu fixieren. Beispielsweise bei Elektroinstallationen in einem Gebäude sind oftmals Kabelkanäle vorgesehen, in denen Elektrokabel verschiedene elektrische Einrichtungen miteinander verbinden. Da üblicherweise auf die Elektrokabel keine nennenswerten Kräfte ausgeübt werden und das Eigengewicht der Elektrokabel gering ist, sind konstruktiv einfache Haltevorrichtungen wie beispielsweise Kabelbinder oder Kabelklemmen ausreichend, um die Elektrokabel relativ zu einem Bauteil zu fixieren.

Es sind jedoch auch Anwendungsbereiche bekannt, bei denen während einer bestimmungsgemäßen Nutzung eines Kabels oder eines Schlauches größere Kräfte auf das Kabel oder den Schlauch ausgeübt werden können und eine zuverlässige Festlegung des entsprechenden länglichen Objekts an dem Bauteil erforderlich oder zumindest wünschenswert ist. Ein solcher Anwendungsbereich betrifft beispielsweise Fahrzeuge, in denen Kabel und Schläuche verschiedene Komponenten des betreffenden Fahrzeugs verbinden. Während einer Nutzung des Fahrzeugs können durch die Bewegung des Fahrzeugs erhebliche Kräfte auf die Kabel und Schläuche ausgeübt werden. Zudem können Kabel und Schläuche zwei oder mehrere Komponenten des Fahrzeugs miteinander verbinden, die während der bestimmungsgemäßen Nutzung des Fahrzeugs relativ zueinander verlagert werden können, sodass sich zumindest abschnittsweise die Anordnung der betreffenden Kabel und Schläuche zu diesen Komponenten oder zu anderen Bauteilen verändert.

Aus der Praxis sind Haltevorrichtungen für Kabel oder andere längliche Objekte bekannt, bei denen ein Grundkörper aus zwei Teilen zusammengefügt wird und zwischen den beiden Teilen eine durch den Grundkörper hindurch verlaufende Objektausnehmung ausgebildet ist, in welcher das längliche Objekt angeordnet und nach dem Zusammenfügen des Grundkörpers durch die beiden zusammengefügten Teile fixiert wird. Derartige Haltevorrichtungen weisen den Vorteil auf, dass das längliche Objekt nicht zunächst in die Objektausnehmung eingefädelt und anschließend längs einer Objektlängsachse durch die Objektausnehmung in dem Grundkörper hindurchgeführt bzw. geschoben und gezogen werden muss. Während der Montage der Haltevorrichtung können die beiden Teile des Grundkörpers entweder relativ zueinander verschwenkt oder voneinander gelöst werden und das längliche Objekt in die geöffnete Objektausnehmung eingebracht und in der gewünschten Position angeordnet werden. Durch das Zusammenfügen des Grundkörpers wird die Objektausnehmung von den zusammengefügten Teilen des Grundkörpers umgeben und das längliche Objekt umschlossen und in der Objektausnehmung festgelegt.

Um das längliche Objekt zuverlässig in der Haltevorrichtung festlegen zu können sollte zweckmäßigerweise ein Innendurchmesser der Objektausnehmung an einen Außendurchmesser so angepasst sein, dass das längliche Objekt durch die üblicherweise bei einer bestimmungsgemäßen Verwendung der Haltevorrichtung auftretenden Kräfte nicht ohne weiteres in der Objektausnehmung verschoben oder gar aus der Objektausnehmung herausgezogen werden kann. In der Praxis tritt allerdings häufig die Anforderung auf, dass längliche Objekte mit einem unterschiedlichen Durchmesser mit einer Haltevorrichtung an einem Bauteil festgelegt und fixiert werden sollen. In diesem Fall müssen verschiedene Haltevorrichtungen bereitgehalten und verwendet werden, die Objektausnehmungen mit unterschiedlichen Durchmessern aufweisen. Um bei Bedarf auch mehrere längliche Objekte mit einer einzigen Haltevorrichtung an einem Bauteil festlegen zu können ist es auch bekannt, dass verschiedene Haltevorrichtungen mit einer unterschiedlichen Anzahl von Objektausnehmungen zur Verfügung stehen und je nach Anforderung die geeignete Haltevorrichtung ausgewählt und verwendet werden kann.

Der Aufwand sowohl für die Herstellung und für das Bereithalten einer Anzahl unterschiedlich ausgestalteter Haltevorrichtungen als auch für die Auswahl und für die Montage der im Einzelfall ausgewählten Haltevorrichtung ist erheblich.

Es wird deshalb als eine Aufgabe der vorliegenden Erfindung angesehen, eine Haltevorrichtung mit den eingangs genannten Merkmalen so weiterzuentwickeln, dass die Herstellung und Montage der Haltevorrichtung möglichst einfach durchgeführt werden kann und dabei kostengünstig eine zuverlässige Festlegung von mindestens einem länglichen Objekt an dem Bauteil erlaubt.

Diese Aufgabe wird erfindungsgemäß dadurch gelöst, dass in der Objektausnehmung ein hülsensegmentförmiges Einlegeteil festlegbar ist, durch welches eine in einer Querschnittsebene quer zu der Objektlängsachse gemessene lichte Weite der Objektausnehmung verringert wird. Mit einem derartigen Einlegeteil, welches in der Objektausnehmung festgelegt wird, kann die lichte Weite der Objektausnehmung verringert werden, sodass im Vergleich zu der Objektausnehmung ohne ein Einlegeteil ein längliches Objekt mit einem kleineren Durchmesser in der mit dem Einlegeteil verengten Objektausnehmung zuverlässig fixiert und auch bei auf das längliche Objekt ausgeübten Kräften zurückgehalten werden kann. Die lichte Weite ist dabei ein Maß für einen größten Durchmesser, den ein längliches Objekt aufweisen kann, welches noch ohne eine Verformung in der Objektausnehmung aufgenommen werden kann. Mit Hilfe von Einlegeteilen, die eine unterschiedlich große Wandstärke aufweisen, kann die lichte Weite bzw. ein Durchmesser der Objektausnehmung in einfacher Weise unterschiedlich vorgegeben und individuell an das im Einzelfall in der Objektausnehmung festzulegende Objekt angepasst werden. Es ist nicht erforderlich, für Objekte mit unterschiedlichen Durchmessern oder Querschnittsflächen jeweils daran angepasste Grundkörper herzustellen und eine große Anzahl unterschiedlicher Grundkörper zur Verfügung zu stellen und bereit zu halten. Vielmehr können durch geeignete Einlegeteile mit unterschiedlichen Wandstärken oder Formgebungen in Kombination mit einem jeweils einheitlich ausgestalteten und hergestellten Grundkörper zahlreiche verschiedene Ausgestaltungen einer Haltevorrichtung erzeugt werden.

Die meisten länglichen Objekte, die üblicherweise in einer derartigen Haltevorrichtung festgelegt werden sollen, sind zylinderförmig oder weisen zumindest einen zylinderförmigen Abschnitt auf. Eine Querschnittsfläche des länglichen Objekts in der Querschnittsebene quer zu der Objektlängsachse ist dann kreisförmig. Die Querschnittsfläche der Objektausnehmung ist zweckmäßigerweise an die Querschnittsfläche des länglichen Objekts angepasst, sodass eine Innenwand der Objektausnehmung an eine Außenwand des länglichen Objekts angepasst ist und die Innenwand der Objektausnehmung eine möglichst große Kontaktfläche zu der Außenwand des darin aufgenommenen und festgelegten Objekts aufweist.

Es ist ebenfalls möglich, dass das längliche Objekt eine ovale oder polygonale, beispielsweise viereckige Querschnittsfläche aufweist. Die Querschnittsfläche der Objektausnehmung kann, muss jedoch nicht daran angepasst sein. Es ist alternativ auch denkbar, dass die Querschnittsfläche der Objektausnehmung eine von der Querschnittsfläche des länglichen Objekts abweichende Querschnittsfläche aufweist, wobei die lichte Weite der Objektausnehmung ausreichend gering vorgegeben ist, dass die Innenwand der Objektausnehmung die Außenwand des Objekts entlang einer in der Querschnittsebene verlaufenden Umfangslinie des Objekts zumindest abschnittsweise bzw. vorzugsweise an einander gegenüberliegenden Abschnitten berührt und dadurch das Objekt in der Objektausnehmung zurückhält. So kann beispielsweise ein längliches Objekt mit einer kreisförmigen Querschnittsfläche in einer Objektausnehmung mit einer viereckigen Querschnittsfläche zurückgehalten werden, falls die viereckige Querschnittsfläche an mindestens zwei einander gegenüberliegenden Seitenkanten die kreisförmige Querschnittsfläche berührt.

Weiterhin ist es denkbar, dass das hülsensegmentförmige Einlegeteil nach innen und bei einer bestimmungsgemäßen Nutzung zum Objekt hin vorspringende Zungen oder Ausformungen aus einem elastischen Material aufweist. Auf diese Weise kann beispielsweise eine gewisse Entkopplung des Objekts von der Haltevorrichtung und damit eine Vibrationsminderung bewirkt werden. Die Ausformungen aus einem elastischen Material können bei einem aus Kunststoff hergestellten hülsensegmentförmigen Einlegeteil in einem 2K-Spritzgussverfahren mit einem im Vergleich mit einer Stützkonstruktion des hülsensegmentförmigen Einlegeteils deutlich weicheren bzw. mit einem elastischen Kunststoffmaterial ausgebildet werden.

Das hülsensegmentförmige Einlegeteil kann eine Formgebung aufweisen, mit welcher die Querschnittsfläche der Objektausnehmung nicht grundsätzlich verändert, sondern lediglich verengt wird. In vorteilhafter Weise ist vorgesehen, dass sich das hülsensegmentförmige Einlegeteil von der Vorderseite des Grundkörpers bis zu dessen gegenüberliegenden Rückseite erstreckt und längs einer Umfangslinie einen an die Innenwand der Objektausnehmung angepassten Verlauf aufweist bzw. sich über einen Abschnitt der Umfangslinie erstreckt. Es kann vorgesehen sein, dass zwei oder mehrere hülsensegmentförmige Einlegeteile zu einer hülsenförmigen Einlegeteilanordnung zusammengefügt und in dieser Anordnung in die Objektausnehmung eingebracht bzw. so darin festgelegt werden können. Die hülsenförmige Einlegeteilanordnung weist dann in der Querschnittsebene eine ringförmige Querschnittsfläche mit einer in der Querschnittsebene kreisförmigen Ausnehmung für das längliche Objekt auf. Es kann ebenfalls vorgesehen sein, dass das hülsensegmentförmige Einlegeteil radial nach innen vorspringende Verkrallungselemente oder Festlegungszungen aufweist, und dass das längliche Objekt durch einen klemmenden oder formschlüssigen Kontakt mit den Verkrallungselementen oder Festlegungszungen des hülsensegmentförmigen Einlegeteils in der Objektausnehmung fixiert und zurückgehalten wird.

Gemäß einer als besonders vorteilhaft erachteten Ausgestaltung des Erfindungsgedankens ist vorgesehen, dass die Kontaktfläche die Objektausnehmung in zwei Hälften unterteilt. Bei einer zylinderförmigen Objektausnehmung mit einer kreisförmigen Querschnittsfläche teilt die Kontaktfläche die Querschnittsfläche der Objektausnehmung in zwei gleichgroße Halbkreisflächen. Bei einer Objektausnehmung mit einer rechteckigen oder quadratischen Querschnittsfläche teilt die Kontaktfläche die Querschnittsfläche der Objektausnehmung in zwei gleichgroße rechteckige Querschnittsflächen oder in zwei gleichgroße dreieckige Querschnittsflächen.

Einer für viele Anwendungsfälle bevorzugten Ausgestaltung des Erfindungsgedankens zufolge kann vorgesehen sein, dass die Objektausnehmung in der Querschnittsebene eine kreisförmige Querschnittsfläche aufweist. Üblicherweise weisen die meisten länglichen Objekte wie beispielsweise Kabel oder Schläuche eine kreisförmige Querschnittsfläche auf. Durch eine daran angepasste Ausgestaltung der Objektausnehmung kann erreicht werden, dass eine Innenwand der Objektausnehmung großflächig bzw. vollflächig an einer zylinderförmige Außenwand der solcher Objekte anliegt und das betreffende Objekt über einen weiten Abschnitt oder über die ganze Umfangslinie hinweg eng anliegend umgibt und umschließt. Durch eine große Anlagefläche für das längliche Objekt in der Objektausnehmung kann eine große Rückhaltekraft bewirkt werden.

Es wird weiterhin als besonders vorteilhaft erachtet, dass in der Objektausnehmung an dem Unterteil und an dem Oberteil jeweils ein hülsensegmentförmiges Einlegeteil festlegbar ist, wobei jedes der beiden hülsensegmentförmigen Einlegeteile in der Querschnittsebene einen halbkreisförmigen Verlauf aufweist und die beiden hülsensegmentförmigen Einlegeteile gemeinsam eine Innenwand der Objektausnehmung im Wesentlichen vollständig bedecken. Ein hülsensegmentförmiges Einlegeteil kann wannenartig ausgebildet sein und über einen in der Querschnittsebene halbkreisringförmigen Verlauf eine sich in einer axialen Richtung gleichbleibend erstreckende zylinderförmige Außenseite und zylinderförmige Innenseite aufweisen. Zwei derartige hülsensegmentförmige Einlegeteile können dann in der Objektausnehmung angeordnet sein und zusammen eine hülsenförmige Einlegeteilanordnung bilden, welche eine zylinderförmige Innenwandfläche zur Aufnahme des länglichen Objekts bilden. Die zylinderförmige Innenwandfläche der hülsenförmigen Einlegeteilanordnung weist einen geringeren Durchmesser als die Innenwand der Objektausnehmung auf. Durch eine Dicke der jeweiligen Wandung der hülsensegmentförmigen Einlegeteile wird die angestrebte Reduzierung des Durchmessers der Objektausnehmung vorgegeben.

Zweckmäßigerweise kann vorgesehen sein, dass das hülsensegmentförmige Einlegeteil rastend in der Objektausnehmung festlegbar ist. Auf diese Weise kann eine Montage der Haltevorrichtung erleichtert werden. Das eine Einlegeteil oder die zwei bzw. eventuell sogar mehr als zwei Einlegeteile können an dem Oberteil und an dem Unterteil angeordnet und rastend festgelegt werden. Anschließend können das längliche Objekt in die derart modifizierte Objektausnehmung eingebracht und das Oberteil mit dem Unterteil verbunden werden, sodass das längliche Objekt allseitig von den Einlegeteilen in der Objektausnehmung umgeben und eingeschlossen ist. Die Rastelemente für das hülsensegmentförmige Einlegeteil können wieder lösbar ausgestaltet sein und eine wiederholte Entnahme und erneute Festlegung der Einlegeteile ermöglichen. Es kann auch vorgesehen sein, dass das hülsensegmentförmige Einlegeteil nach einer rastenden Festlegung an einem Teil des Grundkörpers nicht mehr zerstörungsfrei von dem Grundkörper abgelöst werden kann.

Um möglichst hohen Zug- oder Druckkräften widerstehen zu können, welche längs der Objektlängsachse gerichtet sind und auf das längliche Objekt und auf die das längliche Objekt umschließenden und festlegenden Einlegeteile einwirken, kann in vorteilhafter Weise vorgesehen sein, dass das hülsensegmentförmige Einlegeteil mindestens eine radial nach außen abstehende Eingriffszunge aufweist, die in daran angepasste Ausnehmungen des Grundkörpers eingreifen und eine Verlagerung des hülsensegmentförmigen Einlegeteils längs der Objektlängsachse verhindern. Der formschlüssige Eingriff zwischen der radial nach außen vorspringenden Eingriffszunge und der daran angepassten Ausnehmung in dem Grundkörper bewirkt auch bei vergleichbar kleinen Abmessungen der radial nach außen abstehenden Eingriffszunge eine wirksame Verankerung des Einlegeteils in der Objektausnehmung und ermöglicht es, großen Krafteinwirkungen zu widerstehen.

Mit demselben Ziel kann optional vorgesehen sein, dass eine Innenwand der Objektausnehmung und eine Außenwand des hülsensegmentförmigen Einlegeteils längs einer in der Querschnittsebene verlaufenden Umfangslinie der Objektausnehmung mindestens abschnittsweise aneinander angepasste Anlageflächen aufweisen, die parallel zu der Querschnittsebene verlaufen und eine Verlagerung des hülsensegmentförmigen Einlegeteils in einer Richtung längs der Objektlängsachse verhindern.

Zu diesem Zweck wird es als besonders vorteilhaft erachtet, dass an der Vorderseite und an der Rückseite des Grundkörpers an dem Unterteil und an dem Oberteil jeweils flanschartig in die Objektausnehmung ragende Anlagewülste ausgebildet sein können, zwischen denen radial nach außen vorspringende Außenwandbereiche des hülsensegmentförmigen Einlegeteils so aufgenommen sind, dass durch die Anlagewülste eine Verlagerung des hülsensegmentförmigen Einlegeteils längs der Objektlängsachse verhindert wird. Insbesondere bei Anlagewülsten, welche sich über einen weiten Bereich einer Umfangslinie oder über den gesamten Umfang der Objektausnehmung erstrecken, können bereits Anlagewülste mit geringen Abmessungen in radialer Richtung eine vergleichsweise hohe Rückhaltekraft bewirken und das hülsensegmentförmige Einlegeteil auch bei hohen Krafteinwirkungen zuverlässig in der Objektausnehmung zurückhalten. Die Rastwirkung der rastenden Festlegung des Einlegeteils in der Objektausnehmung muss dann lediglich verhindern, dass sich das Einlegeteil während der Montage unbeabsichtigt ablöst oder verrutscht. Die Aufnahme großer axialer Kräfte bzw. großer Kräfte in einer Richtung parallel zu der Objektlängsachse wird über die nach außen abstehenden Eingriffszungen und über die Anlageflächen der Innenwand der Objektausnehmung und der Außenwand des Einlegeteils bewirkt.

Im Hinblick auf eine möglichst kostengünstige Herstellung des Grundkörpers kann vorgesehen sein, dass das Oberteil und das Unterteil baugleich ausgestaltet sind. Auf diese Weise können mit einem einzigen Werkzeug sowohl das Oberteil als auch das Unterteil und damit der Grundkörper hergestellt werden. Auch die Bereithaltung und die Montage der für den Grundkörper der Haltevorrichtung erforderlichen Komponenten wird dadurch erheblich vereinfacht.

Um die Montage zu erleichtern und insbesondere um eine rasche und zuverlässige Auswahl eines für ein bestimmtes längliches Objekt passenden Einlegeteils zu ermöglichen kann vorgesehen sein, dass das hülsensegmentförmige Einlegeteil eine von dem Grundkörper abweichende Farbgebung aufweist. Dabei können unterschiedlich geformte Einlegeteile unterschiedliche Farbgebungen aufweisen. Auf diese Weise können auch gleichartig gestaltete Einlegeteile, die lediglich eine geringfügig unterschiedliche Wandstärke aufweisen, die mit bloßem Auge kaum voneinander unterschieden werden können, zuverlässig identifiziert und für die Montage der betreffenden Haltevorrichtung ausgewählt und verwendet werden.

Um möglichst vielfältige Anwendungsfälle abdecken zu können und um eine unterschiedliche Anzahl von länglichen Objekten mit jeweils einer daran angepassten Haltevorrichtung an dem Bauteil festlegen zu können ist optional vorgesehen, dass längs der Kontaktfläche zwei oder drei oder mehr als drei Objektausnehmungen ausgebildet sind. Auf diese Weise können mit einem einzigen Montagevorgang mehrere längliche Objekte mit einer einzigen Haltevorrichtung an dem Bauteil festgelegt und fixiert werden.

Wenn für einen vorgegebenen Anwendungsfall während der bestimmungsgemäß erwarteten Nutzung der Haltevorrichtung große Kräfte auftreten können kann optional vorgesehen sein, dass über eine dem Unterteil abgewandte Außenseite des Oberteils ein Verstärkungselement angeordnet ist. Das Verstärkungselement kann beispielsweise ein Metallblech oder eine Platte sein, die klammerartig eine Außenseite des Oberteils umgreift und eine unerwünschte Verformung des Oberteils durch große Kräfte und Momente verhindert, welche auf das Oberteil einwirken. Stattdessen oder zusätzlich kann auch an einer dem Oberteil abgewandten Außenseite des Unterteils ein Verstärkungselement angeordnet sein. Es hat sich gezeigt, dass es im Hinblick auf die Herstellung und die mechanischen Eigenschaften der Haltevorrichtung vorteilhaft ist, wenn der Grundkörper sowie alle Einlegeteile aus einem geeigneten Kunststoffmaterial hergestellt werden, während die Verstärkungselemente aus Metall hergestellt sind. Die Verstärkungselemente können durch die Befestigungsmittel, welche für die Festlegung der Haltevorrichtung an dem Bauteil verwendet werden, zuverlässig und mit hoher Festigkeit an den Grundkörper angedrückt und mit diesem verbunden werden. Nach der Montage können die Verstärkungselemente auf die Haltevorrichtung ausgeübte Kräfte und Momente aufnehmen und verhindern, dass der Grundkörper übermäßig verformt und dadurch gegebenenfalls beschädigt wird. Die Verwendung solcher Verstärkungselemente ist insbesondere bei einem eng oder klein vorgegebenen nutzbaren Bauraum für die Haltevorrichtung vorteilhaft, da der Grundkörper vergleichsweise dünnwandig und mit geringen Abmessungen ausgestaltet sein kann und die während der bestimmungsgemäßen Nutzung der Haltevorrichtung üblicherweise auftretenden mechanischen Beanspruchungen über die Verstärkungselemente aufgenommen und abgetragen werden können.

Um eine möglichst einfache Anpassung der Haltevorrichtung an verschiedene Anforderungen und Verwendungsmöglichkeiten zu ermöglichen kann vorgesehen sein, dass die Haltevorrichtung ein Mittelteil aufweist, welches zwischen dem Oberteil und dem Unterteil festlegbar ist, und dass das Mittelteil an einer dem Oberteil zugewandten Oberseite einen an das Oberteil angepassten Unterteilbereich aufweist und an einer dem Unterteil zugewandten Unterseite einen an das Unterteil angepassten Oberteilbereich aufweist, sodass zwischen dem Mittelteil und dem Oberteil eine obere Kontaktfläche gebildet wird, welche durch mindestens eine zwischen dem Oberteil und dem Mittelteil gebildete obere Objektausnehmung verläuft, und sodass zwischen dem Mittelteil und dem Unterteil eine untere Kontaktfläche gebildet wird, welche durch mindestens eine zwischen dem Mittelteil und dem Unterteil gebildete untere Objektausnehmung verläuft. Durch die Anordnung eines zusätzlichen Mittelteils zwischen dem Oberteil und dem Unterteil kann die Anzahl der in dem Grundkörper ausgebildeten Objektausnehmungen in einfacher Weise verdoppelt werden. Dabei kann in jeder Objektausnehmung ein für den individuellen Verwendungszweck geeignetes Einlegeteil eingesetzt werden, sodass in der Haltevorrichtung mehrere längliche Objekte mit unterschiedlichen Durchmessern aufgenommen und an dem Bauteil festgelegt werden können.

Im Hinblick auf eine möglichst einfache und zuverlässige Festlegung der Haltevorrichtung an einem Bauteil kann optional vorgesehen sein, dass an dem Grundkörper beabstandet von einem mittigen Bereich auf einer der dem Oberteil abgewandten Außenseite des Unterteils eine über die Außenseite des Unterteils vorspringende Positionierhilfeausformung ausgebildet ist. An dem Bauteil kann an einer geeigneten Stelle eine an die vorspringende Positionierhilfeausformung angepasste Ausnehmung bzw. Vertiefung vorgegeben sein. Der Grundkörper der Haltevorrichtung kann dann so an einer Oberfläche des Bauteils angeordnet und festgelegt werden, dass die Positionierhilfeausformung in die Vertiefung in dem Bauteil eingreift. Der Grundkörper kann außerhalb der Positionierhilfeausformung nur dann flächig an der Oberfläche des Bauteils anliegen, wenn der Grundkörper mit der Positionierhilfeausformung an der richtigen Position und mit der richtigen Ausrichtung an dem Bauteil angeordnet und festgelegt wird.

Die Erfindung betrifft auch ein Haltesystem zum Festlegen von mindestens einem länglichen axialsymmetrischen Objekt an einem Bauteil, wobei das Haltesystem eine Haltevorrichtung nach einem der voranstehenden Ansprüche aufweist. Erfindungsgemäß ist vorgesehen, dass das Haltesystem eine Anzahl von unterschiedlich ausgestalteten hülsensegmentförmigen Einlegeteilen aufweist, sodass in einer Objektausnehmung in dem Grundkörper der Haltevorrichtung wahlweise unterschiedlich ausgestaltete hülsensegmentförmige Einlegeteile angeordnet und festgelegt werden können, um je nach den gewählten Einlegeteilen eine unterschiedliche lichte Weite der Objektausnehmung vorgeben zu können. Durch die verschieden ausgestalteten hülsensegmentförmigen Einlegeteile werden vor der Montage der Haltevorrichtung verschiedene Möglichkeiten für die einzelnen Objektausnehmungen zur Verfügung gestellt. Während der Montage können wahlweise diejenigen Einlegeteile ausgewählt und in den Grundkörper eingesetzt werden, die für die im jeweiligen Einzelfall aufzunehmenden länglichen Objekte passend sind. Dabei kann eine Haltevorrichtung mit mehreren gleichen Einlegeteilen oder mit unterschiedlichen Einlegeteilen bestückt und verwendet werden. Da für alle verschiedenen Konfigurationen jeweils gleichartige Grundkörper verwendet werden und lediglich die Einlegeteile an den jeweiligen Verwendungszweck angepasst werden, kann mit wenigen verschiedenen Teilen eine große Vielfalt an Haltevorrichtungen hergestellt und für die Festlegung von länglichen Objekten an Bauteilen verwendet werden. Zweckmäßigerweise werden Einlegeteile mit einer sehr ähnlichen Formgebung, beispielsweise Einlegeteile mit lediglich gering voneinander abweichenden Innendurchmessern farbig unterschieden, sodass über die Farbkodierung eine rasche und zutreffende Identifizierung und Auswahl des jeweils passenden Einlegeteils erleichtert wird.

Nachfolgend werden Ausführungsbeispiele des Erfindungsgedankens näher erläutert, die in den Zeichnungen exemplarisch dargestellt sind. Es zeigt:
Fig. 1 eine perspektivische Ansicht einer Haltevorrichtung zum Festlegen eines länglichen axialsymmetrischen Objekts,
Fig. 2 eine Seitenansicht der in Fig. 1 dargestellten Haltevorrichtung,
Fig. 3 eine perspektivische Ansicht der in den Fig. 1 und 2 dargestellten Haltevorrichtung, welche zwei Kabel als längliche Objekte aufnimmt und an einer Oberfläche eines Bauteils festgelegt ist,
Fig. 4 eine perspektivische Ansicht eines Unterteils eines Grundkörpers der in den Fig. 1 bis 3 gezeigten Haltevorrichtung, wobei an dem Unterteil zwei hülsensegmentförmige Einlegeteile rastend festgelegt sind und drei Befestigungsbuchsen angeordnet sind,
Fig. 5 eine perspektivische Ansicht des in Fig. 4 gezeigten Unterteils aus einer anderen Blickrichtung,
Fig. 6 eine Schnittansicht eines Teilbereichs des in Fig. 4 dargestellten Grundkörpers längs einer Linie VI-VI in Fig. 4, wobei ein hülsensegmentförmiges Einlegeteil noch nicht vollständig in die zugeordnete Objektausnehmung eingeführt ist,
Fig. 7 eine Schnittansicht eines Teilbereichs des in Fig. 4 dargestellten Grundkörpers längs einer Linie VII-VII in Fig. 4, wobei das hülsensegmentförmige Einlegeteil vollständig in die zugeordnete Objektausnehmung eingeführt ist,
Fig. 8 eine Schnittansicht eines Teilbereichs des in Fig. 4 dargestellten Grundkörpers längs einer Linie VIII-VIII in Fig. 4, wobei das hülsensegmentförmige Einlegeteil vollständig in die zugeordnete Objektausnehmung eingeführt ist,
Fig. 9 eine Schnittansicht eines Teilbereichs des in Fig. 4 dargestellten Grundkörpers längs einer Linie IX-IX in Fig. 4, wobei das hülsensegmentförmige Einlegeteil vollständig in die zugeordnete Objektausnehmung eingeführt ist,
Fig. 10 bis 12 mehrere Ansichten eines ersten Einlegeteils,
Fig. 13 bis 15 mehrere Ansichten eines zweiten Einlegeteils,
Fig. 16 bis 18 mehrere Ansichten eines dritten Einlegeteils,
Fig. 19 eine perspektivische Ansicht eines Mittelteils eines Grundkörpers für die Haltevorrichtung,
Fig. 20 eine Seitenansicht des in Fig. 19 dargestellten Mittelteils,
Fig. 21 eine Schnittansicht des in den Fig. 19 und 20 dargestellten Mittelteils längs einer Linie XXI-XXI in Fig. 20,
Fig. 22 eine perspektivische Ansicht einer abweichend zu der in den Fig. 1 bis 3 dargestellten Haltevorrichtung ausgestalteten Haltevorrichtung mit einem Mittelteil in dem Grundkörper,
Fig. 23 eine Seitenansicht der in Fig. 22 dargestellten Haltevorrichtung, und
Fig. 24 eine Schnittansicht der in den Fig. 22 und 23 dargestellten Haltevorrichtung längs einer Linie XXIV-XXIV in Fig. 23.

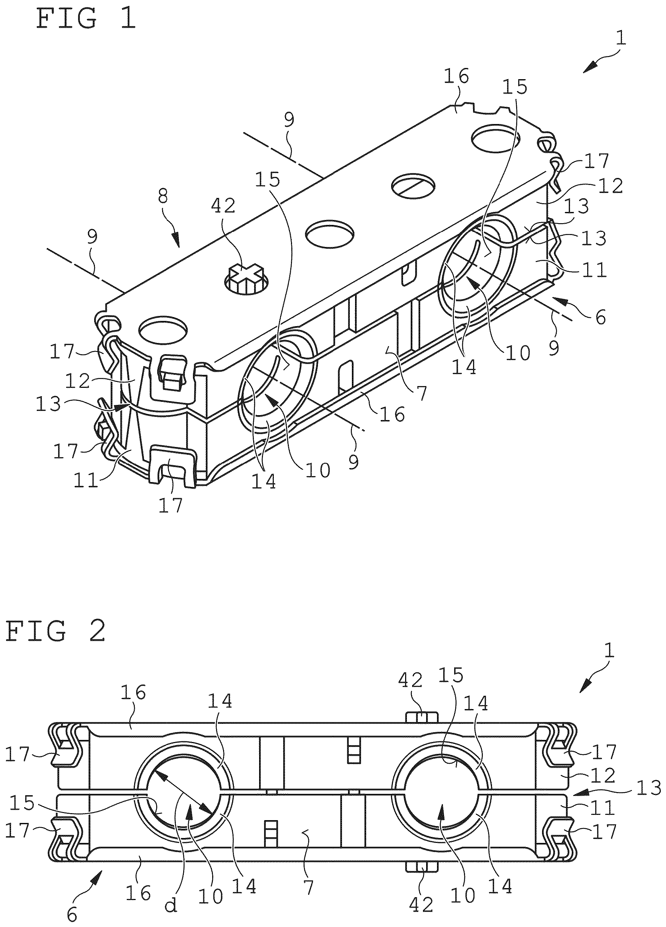

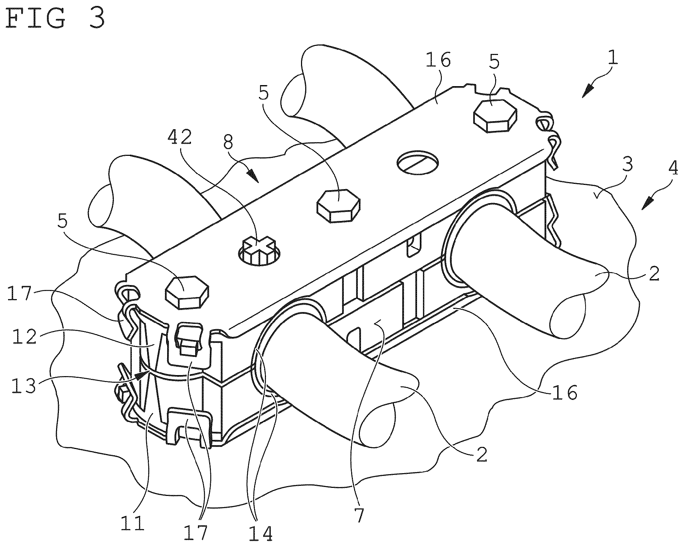

In den Fig. 1 bis 3 ist eine erste Variante einer Haltevorrichtung 1 zum Festlegen von länglichen axialsymmetrischen Objekten wie beispielsweise die in Fig. 3 angedeuteten Kabel 2 oder Schläuche an einer Außenseite 3 eines nicht näher gezeigten Bauteils 4 dargestellt. In den Fig. 1 und 2 ist die Haltevorrichtung 1 in Alleinstellung ohne das Bauteil 4 gezeigt. In Fig. 3 ist die Haltevorrichtung 1 in einem montierten Zustand gezeigt, in welchem die Haltevorrichtung 1 mit geeigneten Befestigungsmitteln 5 auf der Außenseite 3 des Bauteils 4 festgelegt ist und zwei längliche Objekte, bzw. zwei Kabel 2 mit der Haltevorrichtung 1 an dem Bauteil 4 angeordnet und fixiert sind.

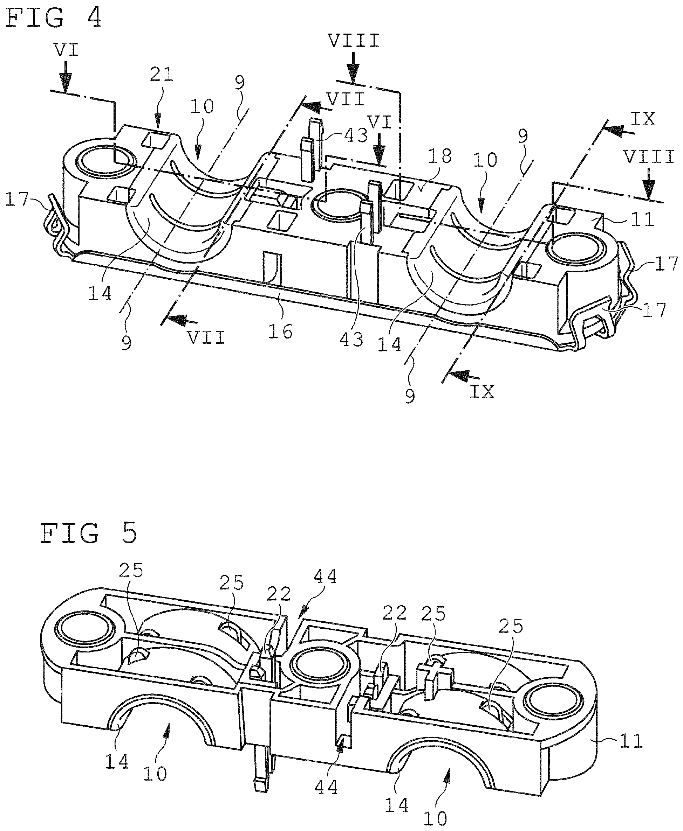

Die Haltevorrichtung 1 weist einen Grundkörper 6 auf, der mit den Befestigungsmitteln 5 an dem Bauteil 4 festlegbar ist. Der Grundkörper 6 weist zwei von einer Vorderseite 7 des Grundkörpers 6 bis zu einer gegenüberliegenden Rückseite 8 des Grundkörpers 6 längs einer Objektlängsachse 9 durch den Grundkörper 6 hindurchgehende Objektausnehmungen 10 auf. Jede Objektausnehmung 10 ist für die Aufnahme eines länglichen Objekts geeignet und vorgesehen. Dabei weist der Grundkörper 6 ein Unterteil 11 und ein relativ zu dem Unterteil 11 verlagerbares Oberteil 12 auf. Eine zwischen dem Unterteil 11 und dem Oberteil 12 verlaufenden Kontaktfläche 13 verläuft durch die beiden Objektausnehmungen 10. Ein längliches Objekt bzw. ein Kabel 2 kann quer zu einer axialen Achse des Objekts in eine der beiden Objektausnehmungen 10 eingeführt werden kann, wenn der Grundkörper 6 auseinandergezogen und die Kontaktfläche 13 freigelegt ist, wie es beispielsweise in Fig. 4 gezeigt ist. Dagegen ist das längliche Objekt bzw. das Kabel 2 in der Objektausnehmung 10 festgelegt, wenn der Grundkörper 6 zusammengefügt und an dem Bauteil 4 festgelegt ist, wie es in Fig. 3 gezeigt ist.

Um längliche Objekte bzw. bei dem exemplarisch dargestellten Ausführungsbeispiel Kabel 2 mit unterschiedlichen Durchmessern zuverlässig in der Haltevorrichtung 1 aufnehmen und fixieren zu können sind in jeder Objektausnehmung 10 jeweils zwei hülsensegmentförmige Einlegeteile 14 rastend festlegbar. Sobald die beiden Einlegeteile 14 in der Objektausnehmung 10 des Grundkörpers 6 angeordnet sind, wird durch die beiden Einlegeteile 14 eine in einer Querschnittsebene quer zu der Objektlängsachse 9 gemessene lichte Weite d der Objektausnehmung 10 verringert. Bei einem Haltesystem stehen verschiedene hülsensegmentförmige Einlegeteile 14 mit unterschiedlichen Wandstärken für eine näherungsweise wie ein halbierter Hohlzylinder ausgestaltete Seitenwand 15 zur Verfügung. Durch die geeignete Auswahl und Anordnung von Einlegeteilen 14, deren Innendurchmesser an einen Außendurchmesser des Kabels 2 bzw. eines länglichen Objekts angepasst sind, kann das Kabel 2 vollflächig und eng an den Seitenwänden 15 der beiden Einlegeteile 14 anliegend in der Objektausnehmung 10 aufgenommen und durch die Einlegeteile 14 in der Objektausnehmung 10 zurückgehalten werden, auch wenn größere Zug- oder Druckkräfte auf das Kabel 2 ausgeübt werden sollten.

Um bei größeren mechanischen Beanspruchungen eine unerwünschte Verformung oder gar Beschädigung des aus dem Unterteil 11 und dem Oberteil 12 zusammengefügten Grundkörpers 6 zu verhindern sind sowohl über eine dem Unterteil 11 abgewandte Außenseite des Oberteils 12 als auch über eine dem Oberteil 12 abgewandte Außenseite des Unterteils 11 jeweils ein Verstärkungselement 16 angeordnet und in dem montierten Zustand, wie er in Fig. 3 gezeigt ist, mit den Befestigungsmitteln 5 an den Grundkörper 6 angedrückt und mit diesem verbunden. Die Verstärkungselemente 16 sind jeweils aus einem zunächst ebenflächigen Metallblechzuschnitt hergestellt und durch Umformen in die gewünschte Formgebung gebracht. Die Verstärkungselemente 16 weisen an ihren jeweiligen Ecken umgebogene Rasthaken 17 auf, welche das zugeordnete Unterteil 11 bzw. Oberteil 12 teilweise umgreifen und die Verstärkungselemente 16 zusätzlich an dem Grundkörper 6 festlegen.

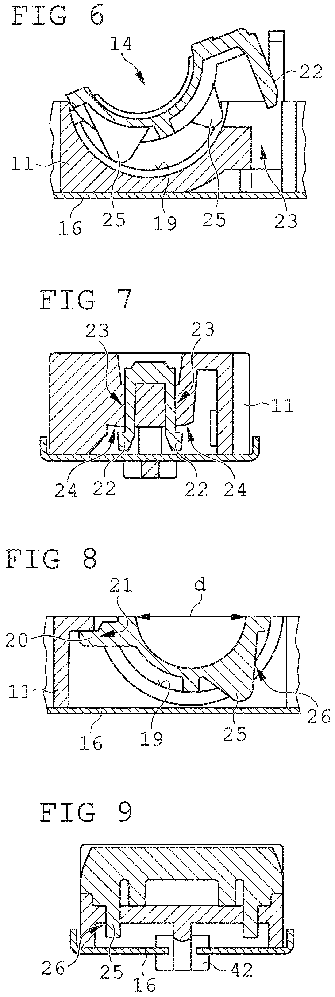

In den Fig. 4 bis 9 sind verschiedene Ansichten und Schnittansichten des Unterteils 11 dargestellt. Die Kontaktfläche 13 verläuft entlang der dem Oberteil 12 zugewandten Außenseite 18 des Unterteils 11. Die Kontaktfläche 13 unterteilt die beiden Objektausnehmungen 10 in zwei Hälften, wobei in dem Unterteil 11 für jede Objektausnehmung 10 jeweils eine Hälfte der betreffenden Objektausnehmung 10 ausgebildet ist. Jede der beiden Objektausnehmungen 10 weist in der beispielsweise in den beiden Fig. 6 und 8 abgebildeten Querschnittsebene eine kreisförmige Querschnittsfläche auf. Durch das in die Objektausnehmung 10 eingebrachte und rastend darin festgelegte Einlegeteil 14 wird die lichte Weite d der Objektausnehmung 10 verringert, wie es in Fig. 8 anschaulich gezeigt ist.

Dabei weist jedes der beiden hülsensegmentförmigen Einlegeteile 14 in der Querschnittsebene einen im Wesentlichen halbkreisförmigen Verlauf auf. Die beiden einander zugeordneten und in einer Objektausnehmung 10 gemeinsam festgelegten hülsensegmentförmigen Einlegeteile 14 bedecken gemeinsam eine Innenwand 19 der Objektausnehmung 10 im Wesentlichen vollständig bedecken.

Jedes hülsensegmentförmige Einlegeteil 14 ist zur Erleichterung der Montage rastend in der zugeordneten Objektausnehmung 10 festlegbar. Dazu weist jedes Einlegeteil 14 radial nach außen abstehende Eingriffsstifte 20 auf, die in daran angepasste Ausnehmungen 21 in dem Unterteil 11 und auch in dem Oberteil 12 jeweils von außen schräg eingeführt werden können. Anschließend kann das Einlegeteil 14 verschwenkt werden, sodass gegenüber von den Eingriffsstiften 20 ausgebildete Rastzungen 22 in daran angepasste Ausnehmungen 23 in dem Unterteil 11 bzw. auch in dem Oberteil 12 eingedrückt und rastend darin festgelegt werden können. In Fig. 6 ist die Anordnung und Ausrichtung eines Einlegeteils 14 während des Einführens der Eingriffsstifte 20 in die zugeordneten Ausnehmungen 21 in dem Unterteil 11 gezeigt. In den Fig. 7 bis 9 ist die Anordnung des Einlegeteils 14 nach einer rastenden Festlegung des Einlegeteils 14 in der Objektausnehmung 10 gezeigt. Die beiden Rastzungen 22 hintergreifen nach einer bestimmungsgemäßen Anordnung und rastenden Festlegung des Einlegeteils 14 in der Objektausnehmung 10 entsprechend ausgebildete Anschlagsflächen 24 in dem Unterteil 11.

Um Zugkräfte und Druckkräfte, die längs einer Objektlängsachse 9 auf ein Kabel 2 einwirken können, besser aufnehmen und abtragen zu können weisen die Einlegeteile 14 an einer Außenseite mehrere radial nach außen abstehende Eingriffszungen 25 auf, die in einem fertig montierten Zustand in daran angepasste Ausnehmungen 26 des Grundkörpers 6 eingreifen und eine unerwünschte Verlagerung des hülsensegmentförmigen Einlegeteils 14 längs der Objektlängsachse 9 verhindern. Zudem weisen die Innenwand 19 der Objektausnehmung 10 und eine Außenwand 27 des hülsensegmentförmigen Einlegeteils 14 längs einer in der Querschnittsebene verlaufenden Umfangslinie der Objektausnehmung 10 mindestens abschnittsweise aneinander angepasste Anlageflächen 28, 29 auf, die parallel zu der Querschnittsebene verlaufen und eine Verlagerung des hülsensegmentförmigen Einlegeteils 14 in einer Richtung längs der Objektlängsachse 9 verhindern. Dabei werden die Anlageflächen 28 von jeweils flanschartig in die Objektausnehmung 10 hineinragenden Anlagewülsten 30 ausgebildet, zwischen denen radial nach außen vorspringende Außenwandbereiche 31 des hülsensegmentförmigen Einlegeteils 14 so aufgenommen sind, dass durch die Anlagewülste 30 eine Verlagerung des hülsensegmentförmigen Einlegeteils 14 längs der Objektlängsachse 9 verhindert wird.

Das Oberteil 12 kann baugleich zu dem Unterteil 11 ausgestaltet sein und in gleicher Weise mit hülsensegmentförmigen Einlegeteilen 14 mit einer jeweils übereinstimmenden Formgebung bestückt sein.

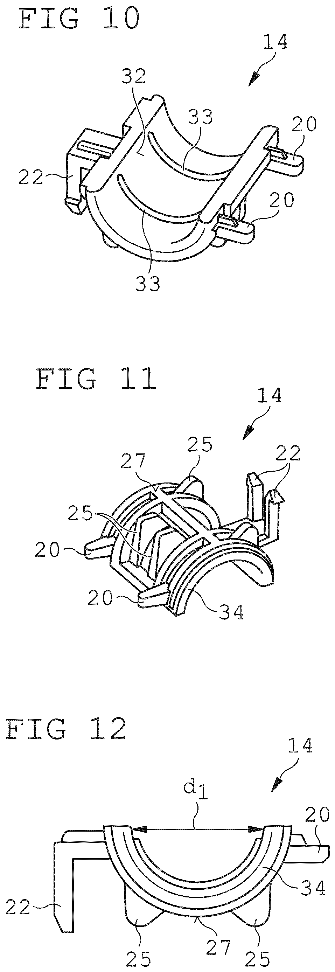

In den Fig. 10 bis 18 sind drei verschiedene Varianten bzw.

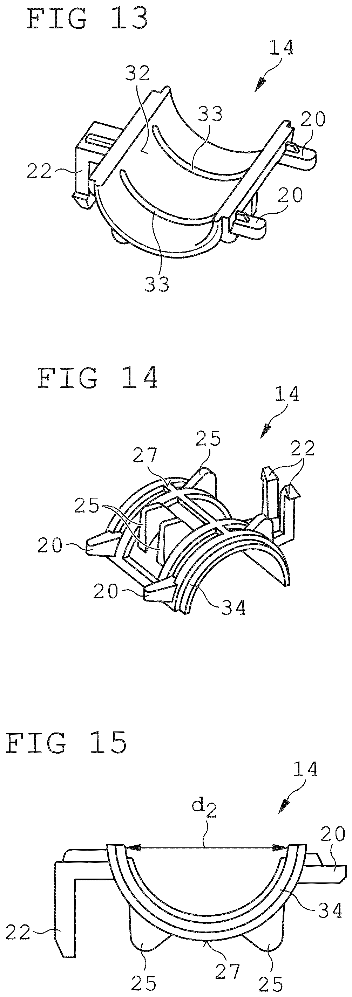

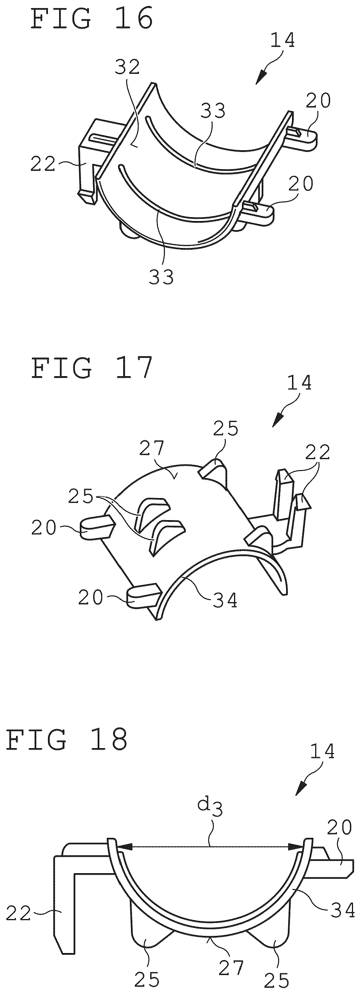

Formgebungen für ein jeweils hülsensegmentförmiges Einlegeteil 14 dargestellt, wobei für jede Variante jeweils eine perspektivische Ansicht einer Innenwand 32, eine perspektivische Ansicht der Außenwand 27 sowie eine Seitenansicht mit einer Blickrichtung senkrecht zu der Querschnittsebene dargestellt sind. An der Innenwand 32 der hülsensegmentförmigen Einlegeteile 14 sind in Umfangsrichtung verlaufende Rippen 33 ausgebildet, mit welchen das Kabel 2 zuverlässig in der Objektausnehmung 10 zurückgehalten werden kann. An der Außenwand 27 sind jeweils die radial nach außen vorspringenden Eingriffsstifte 20 und die Eingriffszungen 25 sowie die abstehenden Rastzungen 22 angeordnet. Die drei verschiedenen Varianten des hülsensegmentförmigen Einlegeteils 14 unterscheidet im Wesentlichen nur eine jeweils unterschiedlich dicke Wandstärke für die in der Querschnittsebene halbkreisförmig verlaufenden Seitenwände 34, wobei sich über die Außenwand 27 verlaufende Verstärkungsstreben bei der Bestimmung der Wandstärke mit berücksichtigt sind. Eine in den Fig. 10 bis 12 dargestellte erste Variante des hülsensegmentförmigen Einlegeteils 14 weist eine dicke Wandstärke und damit eine im Vergleich besonders geringe lichte Weite d₁ auf, welche durch zwei derartige hülsensegmentförmige Einlegeteile 14 in einer Objektausnehmung 10 vorgegeben wird. Eine in den Fig. 13 bis 15 dargestellte zweite Variante weist eine mittlere Wandstärke und damit auch eine mittlere lichte Weite d₂ auf. Eine in den Fig. 16 bis 18 dargestellte dritte Variante des hülsensegmentförmigen Einlegeteils 14 weist eine sehr dünne Wandstärke und damit eine im Vergleich besonders große lichte Weite d₃ auf. Durch die Auswahl und Verwendung der jeweils am besten passenden Einlegeteile 14 können je nach Bedarf verschiedene Kabel 2 mit unterschiedlichen Durchmessern in einer Objektausnehmung 10 in dem Grundkörper 6 aufgenommen und darin zuverlässig fixiert werden.

Um während der Montage eine zuverlässige und zutreffende Auswahl des passenden Einlegeteils 14 zu erleichtern ist vorgesehen, dass jedes hülsensegmentförmige Einlegeteil 14 eine von dem Grundkörper 6 und von allen anders ausgestalteten Einlegeteilen 14 abweichende Farbgebung aufweist.

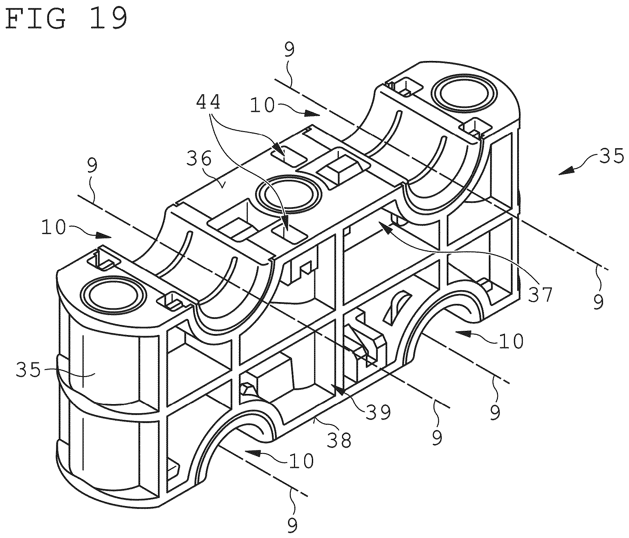

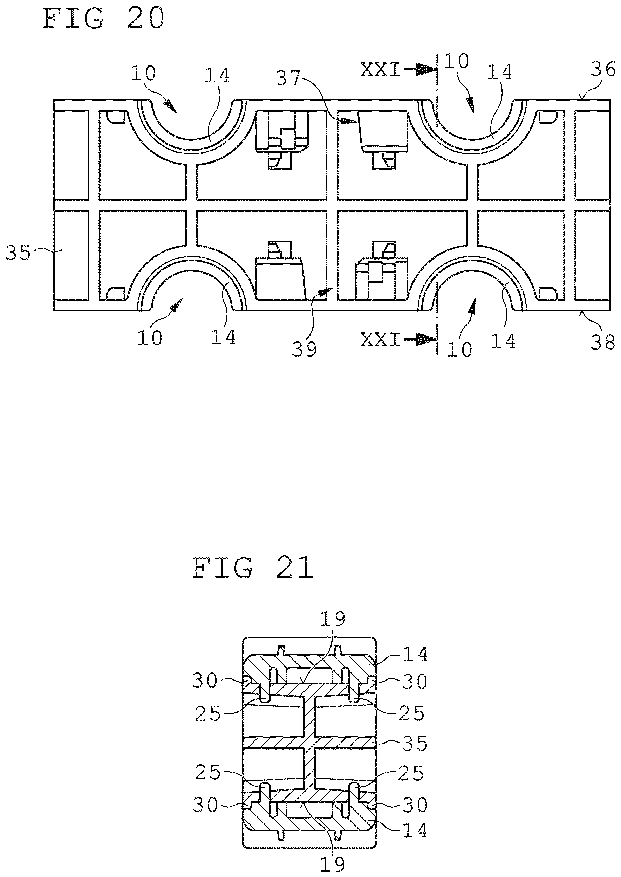

Die Haltevorrichtung 1 kann optional auch ein Mittelteil 35 aufweisen, welches zwischen dem Oberteil 12 und dem Unterteil 11 festlegbar ist und für welches ein exemplarisches Ausführungsbeispiel in den Fig. 19 bis 24 dargestellt ist.

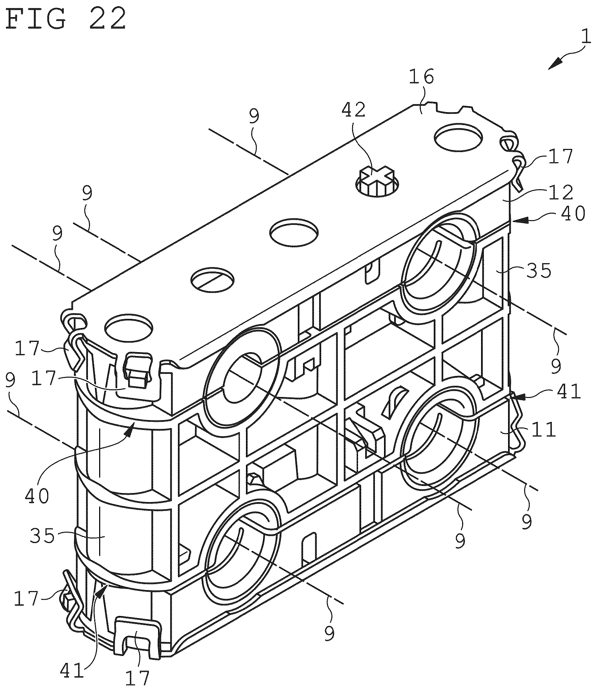

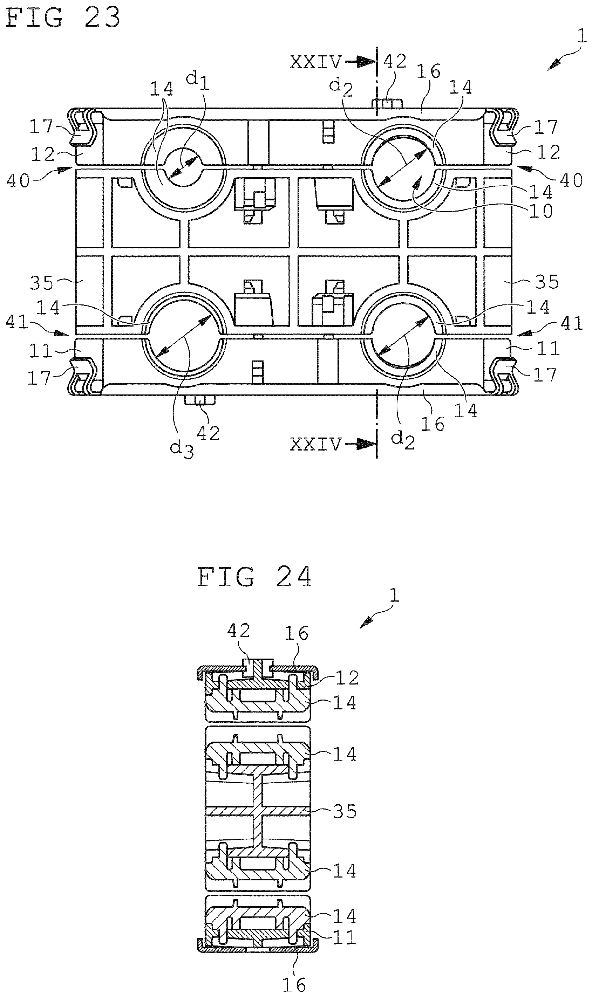

Das Mittelteil 35 weist an einer dem Oberteil 12 zugewandten Oberseite 36 einen an das Oberteil 12 angepassten Unterteilbereich 37 auf, und an einer dem Unterteil 11 zugewandten Unterseite 38 einen an das Unterteil 11 angepassten Oberteilbereich 39 auf. Zwischen dem Mittelteil 35 und dem Oberteil 12 wird eine obere Kontaktfläche 40 gebildet, welche bei dem dargestellten Ausführungsbeispiel durch zwei zwischen dem Oberteil 12 und dem Mittelteil 35 gebildete obere Objektausnehmungen 10 verläuft. Zwischen dem Mittelteil 35 und dem Unterteil 11 wird eine untere Kontaktfläche 41 gebildet, welche durch zwei zwischen dem Mittelteil 35 und dem Unterteil 11 gebildete untere Objektausnehmungen 10 verläuft. Die in den Fig. 22 bis 24 gezeigte fertig montierte Haltevorrichtung 1 mit dem zusätzlich zwischen dem Unterteil 11 und dem Oberteil 12 eingesetzten Mittelteil 35 weist in den vier Objektausnehmungen 10 insgesamt drei verschiedene Paare von hülsensegmentförmigen Einlegeteilen 14 auf, die in der in Fig. 23 gezeigten Ansicht links oben eine Objektausnehmung 10 mit einer besonders geringen lichten Weite d₁ und links unten eine Objektausnehmung 10 mit einer besonders großen lichten Weite d₃ bilden. In den beiden jeweils rechts angeordneten Objektausnehmungen 10 sind jeweils Paare von hülsensegmentförmigen Einlegeteilen 14 angeordnet, die eine mittlere lichte Weite d₂ für die beiden Objektausnehmungen 10 vorgeben. Im Vergleich zu den Darstellungen in den Fig. 10 bis 18 sind die voneinander abweichenden Wandstärken in den Fig. 22 bis 24 überzogen und übermäßig deutlich dargestellt.

Ein Haltesystem kann eine Anzahl von Unterteilen 11 und Oberteilen 12 und Mittelteilen 35 sowie eine Anzahl von unterschiedlich ausgestalteten hülsensegmentförmigen Einlegeteilen 14 aufweisen. Für die Herstellung und Montage einer für einen konkreten Anwendungsfall benötigten Haltevorrichtung 1 können ein Unterteil 11 und ein Oberteil 12 sowie wahlweise ein Mittelteil 35 oder mehrere übereinander angeordnete Mittelteile 35 kombiniert und zu einem Grundkörper 6 zusammengefügt werden. Zuvor können in den Objektausnehmungen 10 wahlweise gleich oder unterschiedlich ausgestaltete hülsensegmentförmige Einlegeteile 14 angeordnet und festgelegt werden, um je nach den gewählten Einlegeteilen 14 eine übereinstimmende oder unterschiedliche lichte Weite d der jeweiligen Objektausnehmungen 10 vorgeben zu können.

An dem Grundkörper 6 ist beabstandet von einem mittigen Bereich auf einer der dem Oberteil 12 abgewandten Außenseite des Unterteils 11 eine über die Außenseite des Unterteils 11 vorspringende Positionierhilfeausformung 42 ausgebildet. Diese Positionierhilfeausformung 42 erleichtert während der Montage eine Positionierung und Ausrichtung der Haltevorrichtung 1 relativ zu der Oberfläche 3 des Bauteils 4, die an einer vorgegebenen Stelle eine an die Positionierhilfeausformung 42 angepasste Ausnehmung oder Vertiefung aufweisen muss. Insbesondere bei sehr ähnlich aussehenden hülsensegmentförmigen Einlegeteilen 14 kann bei mehreren in einer Reihe angeordneten Haltevorrichtungen 1 eine gleichbleibende Anordnung und Ausrichtung der hülsensegmentförmigen Einlegeteile 14 über die Reihe der Haltevorrichtungen 1 hinweg vorgegeben und die Montage der Haltevorrichtungen 1 dadurch erleichtert werden.

Um das Zusammenfügen des Grundkörpers 6 bzw. von Unterteilen 11 und Oberteilen 12 sowie gegebenenfalls dazwischen angeordneten Mittelteilen 35 zu erleichtern können die Oberteile 12 und Unterteile 13 sowie die Mittelteile 35 jeweils nach außen vorspringende Führungselemente 43 und daran angepasste Ausnehmungen 44 aufweisen. Durch einen formschlüssigen Eingriff der vorspringenden Führungselemente 43 mit den daran angepassten Ausnehmungen 44 kann eine zutreffende Ausrichtung und Anordnung der einzelnen Komponenten des Grundkörpers 6 während der Montage unterstützt werden.

## Patentansprüche

1. Haltevorrichtung (1) zum Festlegen eines länglichen axialsymmetrischen Objekts an einem Bauteil (4), wobei die Haltevorrichtung (1) einen Grundkörper (6) aufweist, der mit einem Befestigungsmittel (5) an dem Bauteil (4) festlegbar ist, wobei der Grundkörper (6) mindestens eine von einer Vorderseite (7) des Grundkörpers (6) bis zu einer gegenüberliegenden Rückseite (8) des Grundkörpers (6) längs einer Objektlängsachse (9) durch den Grundkörper (6) hindurchgehende Objektausnehmung (10) für die Aufnahme des länglichen Objekts aufweist, wobei der Grundkörper (6) ein Unterteil (11) und ein relativ zu dem Unterteil (11) verlagerbares Oberteil (12) aufweist, wobei eine zwischen dem Unterteil (11) und dem Oberteil (12) verlaufende Kontaktfläche (13) durch die mindestens eine Objektausnehmung (10) verläuft, sodass das längliche Objekt quer zu einer axialen Achse des Objekts in die Objektausnehmung (10) eingeführt werden kann, wenn der Grundkörper (6) auseinandergezogen und die Kontaktfläche (13) freigelegt ist, und wobei das längliche Objekt in der Objektausnehmung (10) festgelegt ist, wenn der Grundkörper (6) zusammengefügt und an dem Bauteil (4) festgelegt ist, **dadurch gekennzeichnet, dass** in der Objektausnehmung (10) ein hülsensegmentförmiges Einlegeteil (14) festlegbar ist, durch welches eine in einer Querschnittsebene quer zu der Objektlängsachse (9) gemessene lichte Weite (d, d₁, d₂, d₃) der Objektausnehmung (10) verringert wird.

2. Haltevorrichtung (1) nach Anspruch 1, **dadurch gekennzeichnet, dass** die Kontaktfläche (13) die Objektausnehmung (10) in zwei Hälften unterteilt.

3. Haltevorrichtung (1) nach Anspruch 1 oder 2, **dadurch gekennzeichnet, dass** die Objektausnehmung (10) in der Querschnittsebene eine kreisförmige Querschnittsfläche aufweist.

4. Haltevorrichtung (1) nach einem der voranstehenden Ansprüche, **dadurch gekennzeichnet, dass** in der Objektausnehmung (10) an dem Unterteil (11) und an dem Oberteil (12) jeweils ein hülsensegmentförmiges Einlegeteil (14) festlegbar ist, wobei jedes der beiden hülsensegmentförmigen Einlegeteile (14) in der Querschnittsebene einen halbkreisförmigen Verlauf aufweist und die beiden hülsensegmentförmigen Einlegeteile (14) gemeinsam eine Innenwand (19) der Objektausnehmung (10) im Wesentlichen vollständig bedecken.

5. Haltevorrichtung (1) nach einem der voranstehenden Ansprüche, **dadurch gekennzeichnet, dass** das hülsensegmentförmige Einlegeteil (14) rastend in der Objektausnehmung (10) festlegbar ist.

6. Haltevorrichtung (1) nach einem der voranstehenden Ansprüche, **dadurch gekennzeichnet, dass** das hülsensegmentförmige Einlegeteil (14) mindestens eine radial nach außen abstehende Eingriffszunge (25) aufweist, die in daran angepasste Ausnehmungen (26) des Grundkörpers (6) eingreifen und eine Verlagerung des hülsensegmentförmigen Einlegeteils (14) längs der Objektlängsachse (9) verhindern können.

7. Haltevorrichtung (1) nach einem der voranstehenden Ansprüche, **dadurch gekennzeichnet, dass** eine Innenwand (19) der Objektausnehmung (10) und eine Außenwand (27) des hülsensegmentförmigen Einlegeteils (14) längs einer in der Querschnittsebene verlaufenden Umfangslinie der Objektausnehmung (10) mindestens abschnittsweise aneinander angepasste Anlageflächen (28, 29) aufweisen, die parallel zu der Querschnittsebene verlaufen und eine Verlagerung des hülsensegmentförmigen Einlegeteils (14) in einer Richtung längs der Objektlängsachse (9) verhindern.

8. Haltevorrichtung (1) nach Anspruch 7, **dadurch gekennzeichnet, dass** an der Vorderseite (7) und an der Rückseite (8) des Grundkörpers (6) an dem Unterteil (11) und an dem Oberteil (12) jeweils flanschartig in die Objektausnehmung (10) ragende Anlagewülste (30) ausgebildet sind, zwischen denen radial nach außen vorspringende Außenwandbereiche (31) des hülsensegmentförmigen Einlegeteils (14) so aufgenommen sind, dass durch die Anlagewülste (30) eine Verlagerung des hülsensegmentförmigen Einlegeteils (14) längs der Objektlängsachse (9) verhindert wird.

9. Haltevorrichtung (1) nach einem der voranstehenden Ansprüche, **dadurch gekennzeichnet, dass** das Oberteil (12) und das Unterteil (11) baugleich ausgestaltet sind.

10. Haltevorrichtung (1) nach einem der voranstehenden Ansprüche, **dadurch gekennzeichnet, dass** das
hülsensegmentförmige Einlegeteil (14) eine von dem Grundkörper (14) abweichende Farbgebung aufweist.

11. Haltevorrichtung (1) nach einem der voranstehenden Ansprüche, **dadurch gekennzeichnet, dass** längs der Kontaktfläche (13) zwei oder drei oder mehr als drei Objektausnehmungen (10) ausgebildet sind.

12. Haltevorrichtung (1) nach einem der voranstehenden Ansprüche, **dadurch gekennzeichnet, dass** über einer dem Unterteil (11) abgewandte Außenseite des Oberteils (12) ein Verstärkungselement (16) angeordnet ist.

13. Haltevorrichtung (1) nach einem der voranstehenden Ansprüche, **dadurch gekennzeichnet, dass** die Haltevorrichtung (1) ein Mittelteil (35) aufweist, welches zwischen dem Oberteil (12) und dem Unterteil (11) festlegbar ist, und dass das Mittelteil (35) an einer dem Oberteil (12) zugewandten Oberseite (36) einen an das Oberteil (12) angepassten Unterteilbereich (37) aufweist und an einer dem Unterteil (11) zugewandten Unterseite (38) einen an das Unterteil (11) angepassten Oberteilbereich (39) aufweist, sodass zwischen dem Mittelteil (35) und dem Oberteil (12) eine obere Kontaktfläche (40) gebildet wird, welche durch mindestens eine zwischen dem Oberteil (12) und dem Mittelteil (35) gebildete obere Objektausnehmung (10) verläuft, und sodass zwischen dem Mittelteil (35) und dem Unterteil (11) eine untere Kontaktfläche (41) gebildet wird, welche durch mindestens eine zwischen dem Mittelteil (35) und dem Unterteil (11) gebildete untere Objektausnehmung (10) verläuft.

14. Haltevorrichtung (1) nach einem der voranstehenden Ansprüche, **dadurch gekennzeichnet, dass** an dem Grundkörper (6) beabstandet von einem mittigen Bereich auf einer der dem Oberteil (12) abgewandten Außenseite des Unterteils (11) eine über die Außenseite des Unterteils (11) vorspringende Positionierhilfeausformung (42) ausgebildet ist.

15. Haltesystem zum Festlegen von mindestens einem länglichen axialsymmetrischen Objekt an einem Bauteil (4), wobei das Haltesystem eine Haltevorrichtung (1) nach einem der voranstehenden Ansprüche aufweist, **dadurch gekennzeichnet, dass** das Haltesystem eine Anzahl von unterschiedlich ausgestalteten hülsensegmentförmigen Einlegeteilen (14) aufweist, sodass in einer Objektausnehmung (10) in dem Grundkörper (6) der Haltevorrichtung (1) wahlweise unterschiedlich ausgestaltete hülsensegmentförmige Einlegeteile (14) angeordnet und festgelegt werden können, um je nach den gewählten Einlegeteilen (14) eine unterschiedliche lichte Weite (d, d₁, d₂, d₃) der Objektausnehmung (10) vorgeben zu können.
